# EUROPÄISCHE PATENTSCHRIFT

(11) **EP 0 616 824 B1**
(45) Veröffentlichungstag und Bekanntmachung des Hinweises auf die Patenterteilung: **09.10.1996**
(21) Anmeldenummer: 94104529.6
(22) Anmeldetag: 22.03.1994
(51) Int. Cl.: B01D 25/26

(54) **Filterträger**
Filter support
Porte-filtre

(30) Priorität: 23.03.1993 DE 4309366
(43) Veröffentlichungstag der Anmeldung: 28.09.1994
(73) Patentinhaber: HANDTMANN, Thomas, D-88400 Biberach (DE)
(72) Erfinder: HANDTMANN, Thomas, D-88400 Biberach (DE)
(74) Vertreter: Grünecker, Kinkeldey, Stockmair & Schwanhäusser Anwaltssozietät

(56) Entgegenhaltungen:
- WO-A-93/00146
- DE-A- 2 324 876
- DE-U- 8 714 993

## Beschreibung

Die Erfindung betrifft einen Filterträger zum Aufeinanderschichten zu einem Filterturm, mit einem durch einen Boden und eine Seitenwandung begrenzten Filterraum zur Aufnahme eines Filterkuchens, mit einer am Boden ausgebildeten Anpreßplatte, die zumindest teilweise beim Aufeinanderschichten mehrerer Filterträger in den darunterliegenden Filterraum zum Verpressen des dort ausgebildeten Filterkuchens eingreift, mit wenigstens einem unter der Anpreßplatte liegenden Verteilerelement für Unfiltrat und mit einer Dichtung zum Abdichten zwischen der Anpreßplatte und der Seitenwandung des darunterliegenden Filterträgers.

Ein solcher Filterträger ist bereits aus der PCT EP 92/01436 desselben Anmelders bekannt. Derartige Filterträger werden zum Aufbau zu einem Filterturm verwendet, der z.B. insbesondere zur sterilen Filtration in der Getränkeindustrie verwendet werden kann. Bei der Filtration von Bier können Hefezellen und Bakterien zurückgehalten werden, ohne daß der Durchfluß von Feinsubstanzen, die für den Geschmack verantwortlich sind, behindert wird.

Das Filterhilfsmittel wird in einer Anschwemmstation in die Filterträger angeschwemmt. Danach werden die Filterträger aufeinandergeschichtet und bilden so den erwähnten Filterturm.

Die zu filternde Flüssigkeit (Unfiltrat) wird dann von der Seite her in die übereinanderliegenden Filterräume eingeleitet. Damit das Unfiltrat gleichmäßig über die Fläche des Filterhilfsmittels verteilt wird, ist am Boden eines Filterträgers jeweils ein Verteilerelement angeordnet.

Beim Übereinanderschichten der Filterträger greift der mit einer Anpreßplatte versehene Boden eines darüberliegenden Filterträgers in der Art eines Anpreßstempels in den Filterraum des darunterliegenden Filterträgers ein und drückt dort das eingeschwemmte Filterhilfsmittel fest. Damit hierbei kein seitliches Entweichen von Filterhilfsmittel und dann im Filtervorgang von Unfiltrat möglich ist, muß die Anpreßplatte gegenüber der Innenwandung des Filterraums abgedichtet werden. Um dieses Abdichten zu verwirklichen, sind bei den bekannten Filterträgern im Bereich der den Filterraum begrenzenden Seitenwandung umlaufende Ringnuten vorhanden, in die O-Ringdichtungen eingelegt werden. Diese O-Ringdichtungen dichten gegen die vertikalen Wände der Anpreßplatte ab.

Das Verteilerelement, das an der Unterseite der Anpreßplatte gehalten wird, ist dort mit am Umfang verteilt angeordneten Schrauben befestigt.

Dem gegenüber liegt die Aufgabe der Erfindung darin, eine Vereinfachung der Konstruktion bei gleichzeitiger Erhöhung der Verschleiß- und Funktionssicherheit unter Einhaltung der hohen Anforderungen an die Sterilität zu schaffen.

Gelöst wird diese Aufgabe dadurch, daß die Dichtung sowohl eine Dichtkante zum Abdichten zwischen der Anpreßplatte und der Seitenwandung des darunterliegenden Filterträgers als auch einen Dichtkragen zum Abdichten und Halten des Verteilerelements an der Anpreßplatte aufweist.

Mit dieser Lösung wird zum einen die Konstruktion insgesamt einfacher, weil die Dichtung damit drei Funktionen übernimmt, nämlich zum einen das Abdichten zwischen der Anpreßplatte und der Seitenwandung, dann das Halten des Verteilerelements und das Abdichten des Verteilerelements gegenüber der Anpreßplatte. Dadurch, daß alle diese drei Funktionen mit einem einzigen Bauteil, nämlich der Dichtung, verwirklicht werden, vereinfacht sich die Konstruktion sowie die Herstellungskosten beträchtlich. Darüber hinaus ergibt sich auch eine höhere Funktionssicherheit, weil der Dichtkragen auch das Verteilerelement abdichtet.

In einer sehr vorteilhaften Weiterbildung der Erfindung ist die Dichtung an der Anpreßplatte verrastet gehalten. Diese Anordnung der Dichtung läßt sich einfach bewerkstelligen. Außerdem wird dadurch das Anschraüben vermieden. Damit wird auch die Möglichkeit genommen, daß - wie beim Strand der Technik - sich im Bereich der Schraubverbindungen schwer entfernbare Ablagerungen bilden können, die im Hinblick an die hohen Anforderungen hinsichtlich der Sterilität nicht gewünscht sind. Die Filterträger und die Filtertürme dieser Art haben üblicherweise eine kreisrunde Ausbildung. Die Dichtung wird dann als umlaufender Dichtring ausgebildet.

Als Material für den Dichtring hat sich ein schlagzäher und hochfester Kunststoff als besonders geeignet erwiesen. Ein derartiger Kunststoff ist z.B. der im Handel unter der Bezeichnung "Lauramid" erhältliche Kunststoff. Dieser Stoff ist ein im Lactamguß hergestelltes Polyamid. Ein solcher Kunststoff ist außerordentlich dimensionsstabil und hat insbesondere eine hohe Kerbschlagzähigkeit sowie eine hohe Kriechfestigkeit. Damit wird die Dichtung insgesamt verschleißarm, und durch die relativ starre Ausbildung der Dichtkante erfolgt außerdem dann beim Übereinanderstapeln der Filterträger eine zuverlässige Abstreifwirkung durch die Dichtkante entlang der Innenfläche der Seitenwandung.

Die Dichtkante und der Dichtkragen werden in vorteilhafter Ausgestaltung mit Vorspannung ausgebildet. Das bedeutet, daß die Anordnung von Dichtkragen und Dichtkante im Einbauzustand einen bestimmten Druck auf die Innenfläche der Seitenwandung einerseits und das Verteilerelement andererseits ausüben, was sowohl die Dichtwirkung als auch die Haltefunktion erhöht.

Zur Verrastung des Dichtrings mit der Anpreßplatte ist an dem Dichtring ein umlaufender Rastkragen vorgesehen, der dann in eine an der Anpreßplatte ausgebildete, umlaufende Rastnut einschnappt. Zur besseren Anbringung der Dichtung geht die Anpreßplatte von der Anbringseite her zur Rastnut in einer Auflaufschräge über, so daß beim Anordnen der Dichtung diese im Bereich des Rastkragens nach außen geweitet wird, bis der Rastkragen in die Rastnut nach innen einschnappen kann.

Die Verbindung kann dabei so sein, daß der Dichtring unverlierbar an der Anpreßplatte gehalten wird und nur durch Zerstörung entfernt werden kann. Es wäre aber auch denkbar, den Dichtring austauschbar auszugestalten.

Damit das Unfiltrat von der Seite her gleichmäßig zulaufen kann, sind im Dichtring am Umfang verteilt Durchtrittsöffnungen für das Unfiltrat ausgebildet. Bei einem Durchmesser von z.B. 70 cm reicht es aus, mit ca. 5 bis 7 Durchtrittsöffnungen am Umfang verteilt das Unfiltrat zuzuführen. Damit kann eine gleichmäßige Verteilung über dem Filterraum des darunterliegenden Filterelements erreicht werden.

In weiterer vorteilhafter Ausgestaltung der Erfindung ist am Boden gegenüberliegend der Dichtung eine Aufnahmenut für eine umlaufende Außendichtung vorgesehen. Das obere Ende der Seitenwandung wird damit von zwei sich etwa gegenüberliegenden Dichtflächen des darüberliegenden Filterelements aufgenommen und zuverlässig gegen Austritt von Filterhilfsmittel und/oder Unfiltrat abgedichtet.

Eine weitere Ausgestaltung der Erfindung sieht vor, daß die Oberkante der Seitenwandung zumindest auf der Filterraumseite mit einer Abschrägung zum Zentrieren des Dichtrings ausgebildet ist. Damit wird beim Übereinanderschichten nach einer anfänglichen Grobausrichtung von Dichtringen gegenüber dem darunterliegenden Filterraum eine automatische Zentrierung vorgenommen, wenn ein oberer Filterträger mit der Anpreßplatte in den oberen Bereich des Filterraums des darunterliegenden Filterträgers eingeschoben wird.

In einer weiteren vorteilhaften Ausgestaltung der Erfindung ist vorgesehen, daß die Dichtkante an der Dichtung gegenüberliegend zum Dichtkragen angeordnet ist. Damit kompensieren sich zum Teil die auf den Dichtkragen und die Dichtkante eingeleiteten Kräfte an der Stoßstelle zwischen Dichtkante und Dichtkragen einander ab, was die Steifigkeit und damit auch die Funktionsfähigkeit der Dichtung weiter erhöht.

Die Erfindung wird nun im folgenden anhand des in der Zeichnung dargestellten Ausführungsbeispiels weiter erläutert und beschrieben.

Dabei zeigt
- Fig. 1: eine schematische, teilperspektivische Prinzipdarstellung zweier Filterträger;
- Fig. 2: eine Seitenansicht in stark schematisierter Darstellung eines Filterturms, zu dem die Filterträger zusammengebaut werden können;
- Fig. 3: eine Schnittdarstellung durch zwei erfindungsgemäß ausgebildete Filterträger im zusammengebauten Zustand; und
- Fig. 4: eine teilperspektivische Schnittdarstellung einer Dichtung, wie sie bei der Erfindung zum Einsatz kommt.

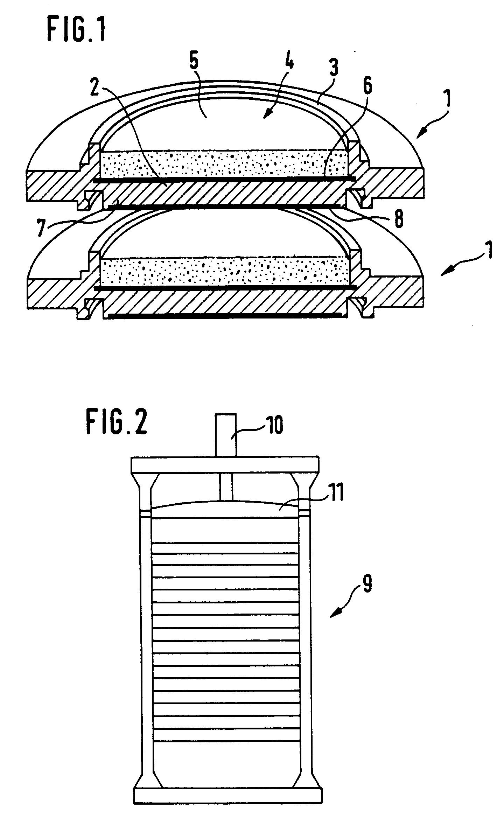

Zur Erläuterung des prinzipiellen Aufbaus wird zunächst auf die Figuren 1 und 2 hingewiesen, in denen die erfindungsgemäße Ausgestaltung zwar nicht dargestellt ist, die jedoch zeigt, wie prinzipiell Filterträger zum Aufbau eines Filterturms aufgebaut sind.

Dabei läßt die Fig. 1 zwei übereinanderliegende Filterträger 1 im Schnitt erkennen. Ein Filterträger 1 hat eine kreisrunde Form und weist einen Boden 2, eine umlaufende Seitenwandung 3 sowie einen Filterraum 4 auf, in den der Filterkuchen 5 in bekannter Weise (WO 93/00146) angeschwemmt wird.

Der Filterkuchen entsteht dabei über einem auf dem Boden 2 angeordneten Maschen- und/oder Sintergewebe 6, durch das hindurch beim Filtervorgang das Filtrat über nicht näher dargestellte Auslaufkanäle in bekannter Weise ablaufen kann.

An den Boden 2 schließt sich die Anpreßplatte 7 an, die an ihrem unteren Ende ein Verteilerelement 8 trägt. Das Verteilerelement 8 kann aus mehreren Schichten eines Maschen- oder Sintergewebes bestehen. Der Zulauf des Unfiltrats erfolgt über nicht näher dargestellte Kanäle in ebenfalls bekannter Weise im zusammengebauten Zustand des Filterturms so, daß über das Verteilerelement 8 das Unfiltrat über der Oberfläche des Filterkuchens 5 des jeweils darunterliegenden Filterträgers 1 verteilt wird.

Wie bereits in der Fig. 1 zu erkennen ist. sind die Filterträger so ausgebildet, daß sie turmartig übereinandergeschichtet werden können, so daß sie dann einen Filterturm 9 bilden, wie es schematisch in der Fig. 2 gezeigt ist. Dabei greift die Anpreßplatte 7 mit dem Verteilerelement 8 in den Filterraum 4 des darunterliegenden Filterelements ein und druckt beim Zusammenpressen den Filterkuchen bis auf ein gewünschtes Maß zusammen. Das Zusammenpressen im Filterturm wird mit einer geeigneten Preßplatte 11 und einem entsprechenden Antrieb 10 bewirkt.

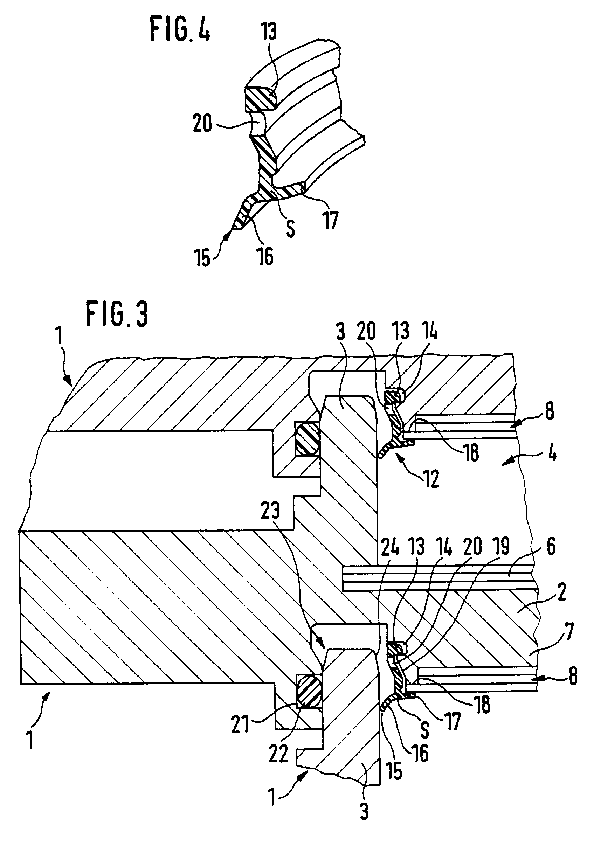

In der Fig. 3 ist nun die erfindungsgemäße Ausgestaltung eines Filterträgers im Zusammenwirken mit einem weiteren Filterträger im Detail dargestellt.

Zu erkennen sind wieder die Seitenwandung 3, der Boden 2, auf dem das Sinter- und/oder Maschengewebe 6 liegt und über dem Filterkuchen aufgebaut wird, sowie der Bereich der Anpreßplatte 7. Unterhalb der Anpreßplatte 7 liegt das aus drei Metallgewebeschichten gebildete Veteilerelement 8.

An dem in den darunterliegenden Filterträger 1 eingreifenden Bereich der Anpreßplatte 7 ist am Umfang eine Profildichtung 12 angeordnet. Die Kontur der Dichtung ist in der Fig. 4 noch deutlicher zu erkennen. Die Dichtung besteht aus einem schlagfesten und hochzähen Kunststoff, beispielsweise aus dem im Handel unter der Bezeichnung Lauramid erhältlichen Polyamid.

Diese Dichtung besitzt einen umlaufenden Rastkragen 13, mit dem sie in einer umlaufenden Ringnut 14 am Umfang der Anpreßplatte 7 verrastet ist. Die Dichtung 12 weist weiterhin die Dichtkante 15 auf, die am Ende der nahezu starren und doch ausreichend flexiblen Dichtlippe 16 entsteht. Diese Dichtkante 15 liegt in der dargestellten Position unter Vorspannung an der Innenfläche der Seitenwandung 3 an und dichtet somit den Bodenbereich eines darüberliegenden Filterträgers gegenüber dem Filterkuchen bzw. Filterraum zuverlässig ab. Gegenüberliegend der Dichtkante 15 ist der Dichtkragen 17 ausgebildet. Dieser Dichtkragen hat zwei Funktionen. Zum einen dichtet er gegenüber dem Verteilerelement 8 ab, zum anderen hält und drückt er auch den umlaufenden Rand des Verteilerelements gegen die Anschrägfläche 18 und dient somit zur Halterung des Verteilerelements. Die mit der Dichtkante 15 versehene Dichtlippe 16 und der Dichtkragen 17 stoßen an derselben Stelle S aufeinander, so daß sich eine gegenseitige Kraftabstützung ergibt.

Zum Befestigen bzw. zum Anbringen der Dichtung ist die Außenwandung der Anpreßplatte mit der Auflaufschräge 19 versehen, an der entlang beim Aufschieben der Rastkragen gleitet und dabei den Rastkragenbereich nach außen weitet, so lange, bis der Rastkragen in die Rastnut 14 einschnappen kann. Die Dichtung ist dann fest an der Anpreßplatte bzw. am Boden des Filterträgers gehalten.

Am Umfang verteilt sind in der Dichtung Bohrungen 20 ausgebildet, die mit nicht näher dargestellten Zulaufbohrungen für das Unfiltrat fluchten. Bei einem Durchmesser des Filterträgers von z.B. 70 cm genügen ca. 5 bis 10 dünne Bohrungen für den Zulauf des Unfiltrats.

Im Bereich gegenüberliegend der Dichtkante 15 ist der Boden mit einer Aufnahmenut 21 versehen, in dem eine umlaufende Außendichtung 22 eingelegt ist. Die Seitenwandung 3 des darunterliegenden Filterträgers wird somit dicht zwischen der Außendichtung 22 und der Dichtkante 15 aufgenommen und damit gegenüber dem darüberliegenden Filterträger abgedichtet.

Die Dichtkante 15 wirkt dabei beim Einschieben und Aufeinanderpressen der Filterträger im Filterturm gleichzeitig auch als Abstreifer, indem sie die Seitenwand von eventuellen Ablagerungen freischabt.

Der obere Bereich der Seitenwandung 23 ist sowohl an der Innen- als auch an der Außenkante mit einer Abschrägung versehen, damit die Seitenwandung leichter in den Bereich zwischen die Dichtkante 15 und die Außendichtung 22 eingeschoben werden kann.

Im zusammengebauten Zustand (wie dargestellt) wird dann das Unfiltrat von der Seite eines jeweiligen Filterträgers her über entsprechende Bohrungen eingeführt und gelangt über die Durchtrittsöffnungen 20 in den Bereich des Verteilerelements 8, so daß es sich dann über dem Filterkuchen verteilt und gleichmäßig dort hindurchtritt.

Über die Maschengewebe 6 läuft das Unfiltrat dann seitlich in einen nicht näher dargestellten Sammelkanal und von dort dann zum Filtratablauf ab.

Die Anordnung der Dichtung am Anpreßplattenbereich erfolgt ohne jede Schraubverbindung lediglich durch Einrasten. Auch die Halterung des Verteilerelements 8 geschieht gleichzeitig mit dem Verrasten der Dichtung, so daß sich insgesamt ein sehr einfacher Aufbau und gleichzeitig eine hohe Dichtwirkung ergibt.

## Patentansprüche

1. Filterträger zum Aufeinanderschichten zu einem Filterturm, mit einem durch einen Boden (2) und eine Seitenwandung (3) begrenzten Filterraum zur Aufnahme eines Filterkuchens, mit einer am Boden ausgebildeten Anpreßplatte (7), die zumindest teilweise beim Aufeinanderschichten mehrerer Filterträger in den darunterliegenden Filterraum zum Verpressen des dort ausgebildeten Filterkuchens eingreift, mit wenigstens einem unter der Anpreßplatte liegenden Verteilerelement (8) für Unfiltrat und mit einer Dichtung zum Abdichten zwischen der Anpreßplatte (7) und der Seitenwandung (3) des darunterliegenden Filterträgers, dadurch **gekennzeichnet**, daß
die Dichtung (12) eine Dichtkante (15) zum Abdichten zwischen der Anpreßplatte (7) und der Seitenwandung (3) des darunterliegenden Filterträgers (1) und einen Dichtkragen (17) zum Abdichten und Halten des Verteilerelements (8) an der Anpreßplatte (7) aufweist.

2. Filterträger nach Anspruch 1, dadurch gekennzeichnet, daß die Dichtung (12) an der Anpreßplatte (7) verrastet gehalten ist.

3. Filterträger nach Anspruch 1 oder 2, dadurch gekennzeichnet, daß die Dichtung (12) als umlaufender Dichtring ausgebildet ist.

4. Filterträger nach Anspruch 3, dadurch gekennzeichnet, daß der Dichtring aus einem schlagzähen und kriechfesten Kunststoff, wie z.B. aus einem im Lactamguß hergestellten Polyamid besteht.

5. Filterträger nach wenigstens einem der vorangegangenen Ansprüche, dadurch gekennzeichnet, daß die Dichtkante (15) und der Dichtkragen (17) mit Vorspannung ausgebildet sind.

6. Filterträger nach wenigstens einem der Ansprüche 3 bis 5, dadurch gekennzeichnet, daß zur Verrastung des Dichtrings (12) mit der Anpreßplatte (7) an dem Dichtring (12) ein umlaufender Rastkragen (13) vorgesehen ist.

7. Filterträger nach Anspruch 6, dadurch gekennzeichnet, daß an der Anpreßplatte (7) eine Auflaufschräge (19) für den Rastkragen (13) ausgebildet ist.

8. Filterträger nach wenigstens einem der Ansprüche 3 bis 7, dadurch gekennzeichnet, daß in dem Dichtring (12) Durchtrittsöffnungen (20) für das Unfiltrat am Umfang verteilt ausgebildet sind.

9. Filterträger nach wenigtens einem der vorangegangenen Ansprüche, dadurch gekennzeichnet, daß an dem Boden (2) gegenüberliegend der Dichtung (12) eine Aufnahmenut (21) für eine umlaufende Außendichtung (22) vorgesehen ist.

10. Filterträger nach wengitens einen der vorangegangenen Ansprüche, dadurch gekennzeichnet, daß die Außenkante der Seitenwandung zumindest auf der Filterraumseite mit einer Abschrägung (24) zum Zentrieren des Dichtrings (12) versehen ist.

11. Filterträger nach wenigstens einem der vorangegangenen Ansprüche, dadurch gekennzeichnet, daß die Dichtkante (15) der Dichtung (12) gegenüberliegend zum Dichtkragen (Punkt S) angeordnet ist.

12. Filterträger nach wenigstens einem der vorangegangenen Ansprüche, dadurch gekennzeichnet, daß die Dichtkante (15) durch einen Lippenring (16) gebildet wird, der trotz dem hohen E-Modul des Grundmaterials (Polyamid) eine ausreichende Nachgiebigkeit gewährleistet.

## Claims

1. Filter support for stacking into a filter tower, with a filter chamber defined by a bottom (2) and a side wall (3) for receiving a filter cake, with a pressure plate (7) which is formed on the bottom and which, when several filter supports are stacked one on top of the other, at least partially engages in the filter chamber underneath for pressing the filter cake formed there, with at least one distributor element (8) located under the pressure plate for unfiltered material and with a seal for sealing between the pressure plate (7) and the side wall (3) of the filter support underneath, characterised in that the seal (12) comprises a sealing edge (15) for sealing between the pressure plate (7) and the side wall (3) of the filter support (1) underneath and a sealing collar (17) for sealing and retaining the distributor element (8) on the pressure plate (7).

2. Filter support according to claim 1, characterised in that the seal (12) is held latched to the pressure plate (7).

3. Filter support according to claim 1 or 2, characterised in that the seal (12) is constructed as a peripheral sealing ring.

4. Filter support according to claim 3, characterised in that the sealing ring is made of an impact-resistant, creep-resistant plastic such as e.g. a polyamide made by lactam pouring.

5. Filter support according to one or more of the preceding claims, characterised in that the sealing edge (15) and the sealing collar (17) are constructed with initial tension.

6. Filter support according to one or more of claims 3 to 5, characterised in that to latch the sealing ring (12) to the pressure plate (7), on the sealing ring (12) is provided a peripheral latching collar (13).

7. Filter support according to claim 6, characterised in that on the pressure plate (7) is formed an approach ramp (19) for the latching collar (13).

8. Filter support according to one or more of claims 3 to 7, characterised in that in the sealing ring (12) distributed over the circumference are formed through-openings (20) for the unfiltered material.

9. Filter support according to one or more of the preceding claims, characterised in that on the bottom (2) opposite the seal (12) is provided a receiving groove (21) for a peripheral outer seal (22).

10. Filter support according to one or more of the preceding claims, characterised in that the outer edge of the side wall at least on the filter chamber side is provided with a slope (24) for centring the sealing ring (12).

11. Filter support according to one or more of the preceding claims, characterised in that the sealing edge (15) is arranged on the seal (12) opposite the sealing collar (point S).

12. Filter support according to one or more of the preceding claims, characterised in that the sealing edge (15) is formed by a lip ring (16) which ensures sufficient resilience in spite of the high modulus of elasticity of the basic material (polyamide).

## Revendications

1. Porte-filtre destiné à être empilé en une tour de filtration, comportant un espace de filtration limité par un fond (2) et une paroi latérale (3) et destiné à recevoir un gâteau de filtration, une plaque presseuse (7) faite sur le fond et s'engageant au moins partiellement, lors de l'empilage de plusieurs porte-filtres, dans l'espace de filtration situé dessous pour presser le gâteau de filtration formé là, au moins un élément répartiteur de liquide à filtrer (8) situé sous la plaque presseuse, et un joint destiné à assurer l'étanchéité entre la plaque presseuse (7) et la paroi latérale (3) du porte-filtre situé dessous,
caractérisé par le fait que
le joint (12) présente un bord d'étanchéité (15) destiné à assurer l' étanchéité entre la plaque presseuse (7) et la paroi latérale (3) du porte-filtre (1) situé dessous et un collet d'étanchéité (17) destiné à assurer l'étanchéité et fixer l'élément répartiteur (8) à la plaque presseuse (7).

2. Porte-filtre selon la revendication 1, caractérisé par le fait que le joint (12) est fixé à la plaque presseuse (7) par encliquetage.

3. Porte-filtre selon l'une des revendications 1 et 2, caractérisé par le fait que le joint (12) est un joint annulaire périphérique.

4. Porte-filtre selon la revendication 3, caractérisé par le fait que le joint annulaire est constitué d'un plastique résistant au choc et au fluage, par exemple d'un polyamide fabriqué par coulée de lactame.

5. Porte-filtre selon au moins une des revendications précédentes, caractérisé par le fait que le bord d'étanchéité (15) et le collet d'étanchéité (17) sont réalisés avec précontrainte.

6. Porte-filtre selon au moins une des revendications 3 à 5, caractérisé par le fait que pour l'encliquetage du joint annulaire (12) sur la plaque presseuse (7), sur celui-ci est prévu un collet circonférentiel d'encliquetage (13).

7. Porte-filtre selon la revendication 6, caractérisé par le fait que sur la plaque presseuse (7) est fait un chanfrein de montée (19) pour le collet d'encliquetage (13).

8. Porte-filtre selon au moins une des revendications 3 à 7, caractérisé par le fait que dans le joint annulaire (12) sont faites, réparties sur le pourtour, des ouvertures (20) pour le passage du liquide à filtrer.

9. Porte-filtre selon au moins une des revendications précédentes, caractérisé par le fait que sur le fond (2) est prévue en face du joint (12) une gorge (21) destinée à recevoir un joint extérieur circonférentiel (22).

10. Porte-filtre selon au moins une des revendications précédentes, caractérisé par le fait que le bord extérieur de la paroi latérale est pourvu au moins du côté de l'espace de filtration d'un chanfrein (24) pour le centrage du joint annulaire (12).

11. Porte-filtre selon au moins une des revendications précédentes, caractérisé par le fait que le bord d'étanchéité (15) du joint (12) est opposé au collet d'étanchéité (point S).

12. Porte-filtre selon au moins une des revendications précédentes, caractérisé par le fait que le bord d'étanchéité (15) est formé par une lèvre annulaire (16) qui, malgré le haut module d'élasticité de la matière de base (polyamide), assure une souplesse suffisante.
